# EUROPEAN PATENT APPLICATION

(11) **EP 1 857 415 A1**
(43) Date of publication of application: **21.11.2007**
(21) Application number: 06425334.7
(22) Date of filing: 18.05.2006
(51) Int. Cl.: C02F 1/00, C02F 1/68, C02F 1/44

(54) **Method and apparatus for the production of drinking waters**

(71) Applicant: G.M.-Mega S.p.A., 20047 Brugherio MI (IT)
(72) Inventor: Gianella, Marco, 20047 Brugherio MI (IT)
(74) Representative: Pizzoli, Antonio

(57) **Abstract**

The present invention relates to a method for the production of drinking waters comprising one or more purification steps of sea, mains, river, lake or well water, one step of addition of a predefined amount of a saline solution of mineral salts, which are essential or beneficial to the human body, a step of control of the properties of the water so obtained and a packaging step. The invention also relates to an apparatus for the production of drinking waters and/or beverages with addition of saline solution of mineral salts, which are essential or beneficial to the human body employing the above-mentioned production method.

## Description

The present invention relates to a method for the production of drinking water by means of an apparatus for the treatment of sea, mains, river, lake or well water and subsequent packaging.

It is known that water must be free from micro-organisms and parasites, as well as from other substances being harmful to human health, in order to be potable.

At present, mineral waters available on the market come from natural springs and are directly bottled after suitable controls related to their mineral composition and the absence of said harmful substances. However, the so produced waters do not provide absolutely constant chemical, physical and organoleptic characteristics.

Methods for purifying sea or tap water are also known, wherein water is made to run through various types of filters, such as for example mesh filters, active carbons filters, thin cartridge filters and the like, which are suitably arranged and can completely remove the substances possibly present in suspension, gases and smells. On the contrary, the impurities deriving from the environmental and atmospheric pollution are eliminated by reverse osmosis processes, which are carried out with suitable osmotic filters.

The filtration systems are usually controlled by highly sophisticated electronic panels, allowing to perform a real time monitoring of several relevant water parameters, such as conductivity, pH, flow rate power and others and others.

The purification step is generally calibrated on the basis of the composition of the incoming water, on which a preliminary analysis related to the fixed residual and the solid impurities percentages composition must be carried out. Thus, the filtration block may be adapted depending on the nature of the water to be purified.

The disinfection is then a very important step, which must be carried out during the treatment of the water and during the rinsing and the filling of the bottles.

The finished product obtained is substantially free from impurities and shows low conductivity values.

The waters so treated are employed in many fields and for many usages, ranging from industrial processes to agriculture, pharmaceutical, food and beverage industry. In the beverage industry in particular, the finished product downstream of the filtration blocks and the osmotic filters is used for the production of carbonated beverages, juices, alcoholic beverages and for the production of wine and beer.

However, the use of waters purified by means of filtration and reverse osmosis treatments as common table waters is not known. This is mainly due to the fact that such purified and deionised waters have not particularly relevant chemical, physical and organoleptic characteristics, which are, on the contrary, the strong point of known bottled waters.

It is known that between the end of the nineteenth century and the beginning of the twentieth century the French scientist René Quinton affirmed that sea water has notable beneficial properties for the organism and gave birth to a treatment of the most varied pathologies also based, among various methods, on the oral administering and on the injection into the human body of medicines based on saline solutions derived from sea water.

However, the use of saline solutions derived from sea waters for preparing beverages such as table waters and other common beverages is not known.

Object of the present invention is thus to provide an apparatus and a method for the production of drinking water having constant and controlled chemical, physical and organoleptic characteristics. According to the present invention, such an object is achieved with an apparatus and a method for the treatment of water comprising one or more purification steps of sea water or incoming water, one step of addition of a predefined amount of a saline solution of mineral salts, which are essential or beneficial to the human body, strictly derived from sea water, a step of control of the properties of the water so obtained and a packaging step.

The main advantage of the water produced by means of the apparatus and the method according to the present invention is to guarantee the constancy of the characteristics of the water base obtained through a controlled purification treatment.

Another advantage of the water produced by means of the apparatus and the method according to the present invention is to guarantee also the constancy of the chemical-physical characteristics of the produced water or beverage, through the constant control of the amount of the saline solution added to the water base.

Still another advantage of the water produced according to a preferred embodiment of the method of the invention resides in providing excellent organoleptic, chemical and physical characteristics, such as to make it beneficial to the health of the organism.

Further advantages and characteristics of the apparatus and the method according to the present invention will be evident to those skilled in the art from the following and not limiting description of an embodiment thereof, with reference to the annexed drawings, wherein:
- Figure 1 shows a flowchart pointing out the main steps of the production method according to the present invention; and
- Figure 2 shows a scheme of an embodiment of an apparatus using the production method according to the present invention.

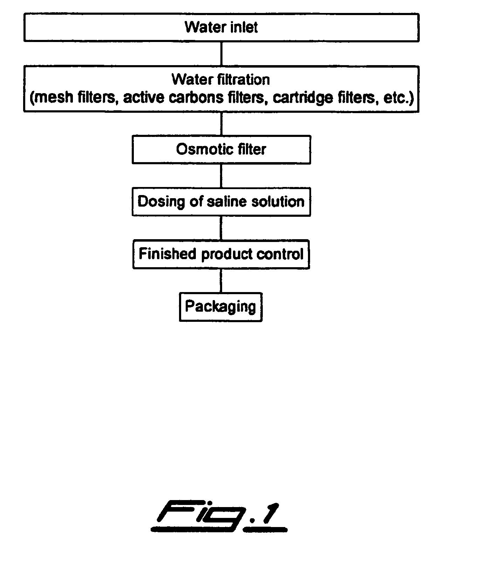

Figure 1 shows a flowchart pointing out the main steps of the production method according to the present invention. The water entering the treatment apparatus initially passes through a set of filters suitably arranged, which retain the suspensions, gases and smells being possibly present. The arrangement, the number of filters and the number of runs through each filter depend on the quality of the water being treated and on the amount of impurities which must be removed. Such filters may be for instance mesh filters, cartridge filters and active carbons filters.

The water so filtered then reaches an osmotic filter where, through a reverse osmosis process, all the impurities deriving from environmental and atmospheric pollution are completely removed. The filtering operations and the osmotic filter treatment are constantly kept under control by sophisticated systems monitoring the process parameters in real time, in order to guarantee the constancy of the characteristics of the produced water.

The steps of treatment of the water by means of filtration and reverse osmosis, as well as the above-mentioned systems monitoring the parameters of the process are well known in the art and do not need a detailed description.

The product coming out from the filtration block is thereby a purified water base being essentially free from impurities and having a minimum electrical conductivity, e.g. equal to about 10 - 12 µS/cm. A predefined amount of saline solution of mineral salts essential or beneficial to human body, which are suitably selected and controlled, is thus added to the water base so obtained.

Preferably, the saline solution employed is a solution of sea salts taken at a suitable depth and subject to different filtration and antibacterial treatments known in the field. Such a solution is sold in a controlled form by various pharmaceutical industries, such as for instance the Hering homeopathic laboratory, based in Ragusa (Italy).

The dosing of the saline solution is carried out by means of a dosing device, such as, e.g. a pump, which adjusts the amount of salts provided to the purified water coming out from the osmotic filter. The content of salts being present in the water thereby strictly and exclusively depends on the amount introduced immediately downstream of the osmotic filter, which gives the produced water chemical-physical characteristics being extremely controlled and reproducible, as well as excellent organoleptic characteristics. In addition, the possibility of choosing different degrees of adjustment of the amount of supplied saline solution allows to obtain different chemical-physical properties, and thereby a varied set of products by starting from the same water base.

Following the dosing step of saline solution, the water can be subject to a further set of controls such as running through UV filters and the like, then arriving to the final packaging step.

The constant monitoring of the parameters of the produced water allows to stop the process whether the dosing of saline solution is not carried out correctly, or whenever the intermediate product exceeds the calibration ranges prescribed for the different controlled parameters.

An example of the application of the above-described method along with the results of the analyses carried out on the drinkable water so produced is herein set forth.

### Experiment 1

An amount of mains water at the flow rate of 0.55 m³/h was filtered in an apparatus for the treatment of waters by means of a set of filters comprising one active carbons filter and two cartridge filters, respectively a 25 µm and 3 µm filter, and subsequently was made to run through an osmotic filter. Thereby, a water base having a minimum conductivity, equal to about 10 - 12 µS/cm, was obtained. A 5‰ solution of a concentrated sea salts solution produced by the Hering homeopathic laboratory (Ragusa, Italy), taken from a reservoir and pumped to the main line of the apparatus, was added to such a water base. The table set forth below shows the data related to the chemical analysis on the saline solution employed and on the substances dissolved in one litre of water obtained through the experiment. As it may be seen, the water obtained had excellent organoleptic characteristics and a concentration of dissolved substances similar to those noticeable in the best mineral waters.

| **Main anions [mg/l]** | **Concentration in saline solution [mg/l]** | **Concentration in the produced water [mg/l]** |
|---|---|---|
| Na⁺ | 10200,00 | 51,00 |
| Mg⁺⁺ | 1400,00 | 7,00 |
| K⁺ | 395 | 1,98 |
| Ca⁺⁺ | 382 | 1,91 |

| **Main cations [mg/l]** | **Concentration in saline solution** | **Concentration in the produced water [mg/l]** |
|---|---|---|
| Cl⁻ | 18800,00 | 94,00 |
| SO4²⁻ | 2700,00 | 13,50 |
| HCO3⁻ | 134,2 | 0,67 |

| **Elements in ionic dispersion** | **Concentration in saline solution [mg/l]** | **Concentration in the produced water [mg/l]** |
|---|---|---|
| A1 | 0,010 | traces |
| Ar | 0,615 | 0,003 |
| As | 0,003 | traces |
| B | 5,000 | 0,025 |
| Ba | 0,030 | traces |
| Br | 65,000 | 0,325 |
| C | 30,000 | 0,150 |
| Cd | 0,001 | traces |
| Co | 0,005 | traces |
| Cr | 0,001 | traces |
| Cu | 0,004 | traces |
| F | 6,000 | 0,030 |
| Fe | 0,003 | traces |
| I | 0,060 | traces |
| In | 0,021 | traces |
| Li | 0,170 | 0,001 |
| Mn | 0,067 | traces |
| Mo | 0,005 | traces |
| N | 0,511 | 0,003 |
| Ni | 0,002 | traces |
| P | 0,070 | traces |
| Pa | 0,003 | traces |
| Pb | 0,005 | traces |
| Rb | 0,120 | 0,001 |
| Ru | 0,123 | 0,001 |
| Si | 3,000 | 0,015 |
| Sr | 13,000 | 0,065 |
| Ti | 0,001 | traces |
| Ur | 0,003 | traces |
| V | 0,002 | traces |
| Zn | 0,015 | traces |

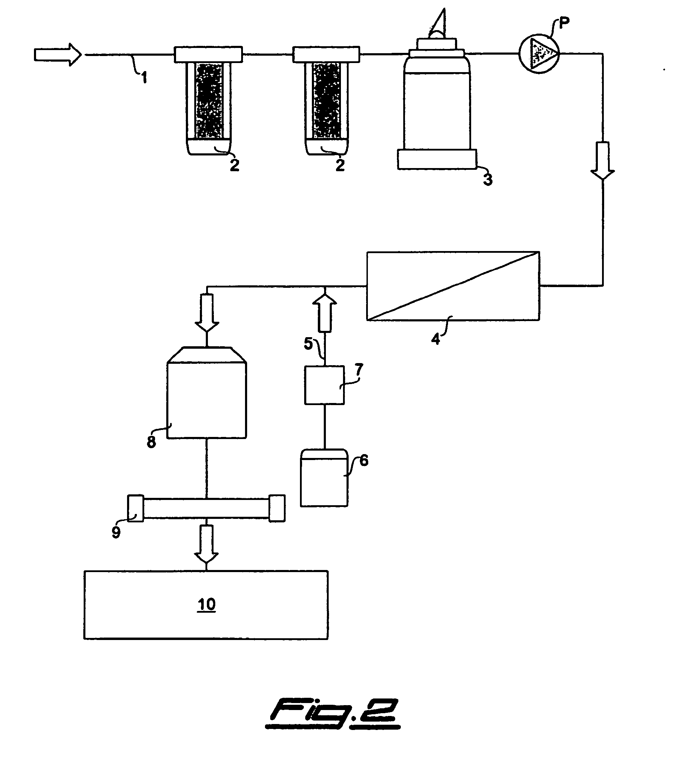

Figure 2 shows an example of a production line of an apparatus for the treatment and the packaging of waters, to which the production method according to the present invention is applied.

The production circuit 1 carries the water along the whole path from the entrance to the packaging. After entering the apparatus, the water passes through a set of cartridge filters 2 that retain the suspensions and the thinner particles and an active carbons filter 3 that retains the gases and the smells being present.

The water is subsequently pumped, e.g. by means of a pump P, to a filter 4 wherein the reverse osmosis occurs. Immediately downstream of said filter 4, the line 1 comes to a line 5 pumping a saline solution taken from a reservoir 6. A dosing pump 7, controlled by the continuous monitoring system, manages the dosing of the salts into the water.

The water obtained downstream of the introduction point of the above-mentioned saline solution has the predefined chemical-physical and organoleptic characteristics, and has controlled and constant pH and electrical conductivity values.

The production line is further provided with other elements, such as, for instance, devices for the control of water level, pH and electrical conductivity analyzers, a restart reservoir 8 and a UV filter 9, and continues in the packaging area 10 where additives may be added to water, such as, for instance, carbon dioxide.

Furthermore, it is possible to add other substances to the produced water, in order to prepare beverages such as, for example, tea, fruit juices and energy drinks.

Due to the beneficial properties to the human body it is also possible to use the water produced according to the present invention in the aesthetic and/or medical field, such as, for instance, in aerosol treatments, hydration cures and for preparing food integrators.

Along the whole production line, control devices associated to the main control panel are provided, allowing the real time monitoring of the most important parameters of the water, such as electrical conductivity, pH, pressure, flow rate power and the like, and allowing to stop the treatment in case the intermediate product does not comply with the predefined process parameters.

Possible variants and/or modifications may be made by those skilled in the art to the hereinabove described and illustrated invention, while remaining within the scope of the following claims.

## Claims

1. Method for the production of drinking waters, **characterized by** comprising one or more purification steps of sea, mains, river, lake or well water, one step of addition of a predefined amount of a saline solution of mineral salts which are essential or beneficial to the human body, a step of control of the properties of the water so obtained and a packaging step.

2. Method for the production of drinking waters according to claim 1, wherein said saline solution is a sea salts solution.

3. Method for the production of drinking waters according to claim 2, wherein said saline solution is diluted at 5 to 10 ‰ in the purified water.

4. Method for the production of drinking waters according to one of the previous claims, wherein said saline solution is taken from a reservoir (6) for saline solutions and dosed by means of a dosing device (7).

5. Use of the production method according to one of the previous claims for the production of beverages.

6. Apparatus for the production of drinking waters comprising a set of filters (2, 3) for the purification of sea, mains, river, lake or well water, an osmotic filter (4) for the reverse osmosis treatment of the water, a water control system (8, 9) and a packaging system (10), **characterized by** comprising a reservoir (6) for saline solutions and a dosing device (7), which are arranged downstream of the osmotic filter (4).
